# EUROPEAN PATENT APPLICATION

(11) **EP 1 908 443 A1**
(43) Date of publication of application: **09.04.2008**
(21) Application number: 07117846.1
(22) Date of filing: 03.10.2007
(51) Int. Cl.: A61H 33/02

(54) **Mixing device for tub**

(30) Priority: 06.10.2006 JP 2006275040; 19.09.2007 US 858097
(71) Applicant: Masuda, Masatoshi, Kyoto-city, Kyoto 615-0031 (JP)
(72) Inventor: Masuda, Masatoshi, Kyoto-city Kyoto 615-0031 (JP)
(74) Representative: pronovem

(57) **Abstract**

A fluid mixing apparatus configured to be connected to a tub, a liquid supply path, and a gas supply path, includes: a liquid-storing chamber; a supply pipe disposed inside the liquid-storing chamber and having multiple holes for discharging liquid; a liquid level setting device for setting a liquid level in the liquid-storing chamber; and a circulation path for circulating the liquid in the liquid-storing chamber. The multiple holes are disposed substantially only in a portion of the supply pipe, which portion is located substantially above the set liquid level in the liquid-storing chamber.

## Description

### Background of the Invention

### Field of the Invention

The present invention generally relates to a fluid mixing device for a tub which mixes gas and liquid in order to supply a tub.

### Description of the Related Art

The device in Japanese Patent Laid-open No. 2001-145676 is known as a device which mixes gas with liquid to supply this kind of tub. The device disclosed in Japanese Patent Laid-open No. 2001-145676 provides a tub, a jet nozzle which sprays a jet flow to a tub, and an air intake which connects to the jet nozzle by means of an air flow pipe. Thus, according to the device disclosed in Japanese Patent Laid-open No. 2001-145676, it is possible to supply liquid which has mixed with the gas in the tub, and it is possible to enhance the effect of a warm bath.

However, for the device disclosed in Japanese Patent Laid-open No. 2001-145676, because there is simply only the supply of gas through the air flow pipe to the liquid which is to be supplied to the tub, it is not possible to mix enough gas. If it is not possible to mix enough gas, the gas from the liquid which was mixed in the tub will immediately flow out, and it will not be possible to achieve a sufficient warm bath effect.

### Summary of the Invention

In view of the above, the present invention was made to solve at least one of the above-mentioned problems. An embodiment of the present invention has an object of providing a fluid mixing device for a tub for which there is mixed sufficient gas with the liquid that is supplied to the tub. Another embodiment of the present invention has an object of providing a bath fluid mixing apparatus including the fluid mixing device.

The invention described in Embodiment 1 is a mixing apparatus for mixing gas into a liquid supplied to a tub, which is characterized by having: a mixing chamber connected to a tub, gas supply part and liquid supply part and in which gas and liquid are mixed; a supply pipe installed inside the mixing chamber and having many holes through which to inject liquid into the space above the level of liquid stored in the mixing chamber; and circulation lines with a circulation pump for supplying the liquid stored in the mixing chamber to the supply pipe.

The invention described in Embodiment 2 is a mixing apparatus according to Embodiment 1, wherein the mixing chamber has a level sensor and also has a control mechanism for adjusting the feed rate of liquid to the mixing chamber according to the level in the mixing chamber.

The invention described in Embodiment 3 is a mixing apparatus according to Embodiment 1 or 2, wherein the supply pipe has a gas introduction pipe for causing the gas dwelling in the top layer of the mixing chamber to flow in.

The invention described in Embodiment 4 is a mixing apparatus according to any one of Embodiments 1 to 3, wherein the gas supply part is connected to the circulation lines.

The invention described in Embodiment 5 is a mixing apparatus according to any one of Embodiments 1 to 3, wherein the gas supply part is connected to the top section of the mixing chamber and also to the circulation lines.

The invention described in Embodiment 6 is a mixing apparatus according to any one of Embodiments 1 to 5, wherein the gas supplied from the gas supply part is carbon dioxide.

According to the invention described in Embodiment 1, the installation in the mixing chamber of the supply pipe having many holes through which to inject liquid into the space above the level of liquid stored in the mixing chamber allows gas to be dissolved in liquid.

According to the invention described in Embodiment 2, the provision of the level sensor in the mixing chamber and also of the control mechanism for adjusting the feed rate of liquid according to the level in the mixing chamber allows the ratio of liquid and gas in the mixing chamber to be maintained at an appropriate condition needed to dissolve gas in liquid.

According to the invention described in Embodiment 3, the provision of the gas introduction pipe for causing the gas dwelling in the top layer of the mixing chamber to flow in allows the dissolution efficiency of gas in liquid to be increased.

According to the invention described in Embodiment 4, the connection of the gas supply part to the circulation lines allows the dissolution efficiency of gas in liquid to be increased.

According to the invention described in Embodiment 5, the connection of the gas supply part to the top section of the mixing chamber and also to the circulation lines allows the dissolution efficiency of gas in liquid to be increased further.

According to the invention described in Embodiment 6, the use of carbon dioxide as the gas supplied from the gas supply part allows for promotion of blood circulation in the user's body.

For purposes of summarizing the invention and the advantages achieved over the related art, certain objects and advantages of the invention are described in this disclosure. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

Further aspects, features and advantages of this invention will become apparent from the detailed description of the preferred embodiments which follow.

### Brief Description of the Drawings

These and other features of this invention will now be described with reference to the drawings of preferred embodiments which are intended to illustrate and not to limit the invention. The drawings are oversimplified for illustrative purposes and are not to scale.

Fig. 1 is a perspective view of a tub 3 constituting a thermal bath apparatus that applies a mixing chamber 20 conforming to the first example of the present invention.

Fig. 2 is a schematic diagram of the flows of liquid and gas in a thermal bath apparatus that applies a mixing chamber 20 conforming to the first example of the present invention.

Fig. 3 is a block diagram of a key electrical configuration of a thermal bath apparatus that applies a mixing chamber 20 conforming to the first example of the present invention.

Fig. 4 is an explanation drawing of a mixing apparatus 20 conforming to the first example of the present invention.

Fig. 5 is a partial side section view of a supply pipe 220 provided in a mixing apparatus 20 conforming to the first example of the present invention.

Fig. 6 is a schematic diagram of the flows of liquid and gas in a thermal bath apparatus that applies a mixing chamber 20 conforming to the second example of the present invention.

Fig. 7 is a schematic diagram of the flows of liquid and gas in a thermal bath apparatus that applies a mixing chamber 20 conforming to the third example of the present invention.

Fig. 8 is a schematic diagram of the flows of liquid and gas in a thermal bath apparatus that applies a mixing chamber 20 conforming to the fourth example of the present invention.

Fig. 9 is an explanation drawing of a variation of a mixing chamber 20 conforming to the present invention.

Fig. 10 is a block diagram of a key electrical configuration of a bath mixing apparatus conforming to an example of the present invention.

Fig. 11 is a schematic diagram of a bath mixing apparatus conforming to an example of the present invention.

[Description of Symbols]

- 3: Tub

- 20: Mixing apparatus

- 21: Mixing chamber

- 30: Circulation pump

- 31: Circulation pump

- 40: Gas supply part

- 50: Liquid supply part

- 60: Chamber circulation means

- 71: Supply line

- 72: Conduit

- 73: Circulation line

- 74: Circulation line

- 75: Conduit

- 76: Conduit

- 77: Conduit

- 78: Conduit

- 82: Flow rate adjustment valve

- 83: Flow rate adjustment valve

- 85: Flow rate adjustment valve

- 86: Flow rate adjustment valve

- 87: Flow rate adjustment valve

- 88: Flow rate adjustment valve

- 89: Open/close valve

- 91: Conduit

- 92: Conduit

- 93: Conduit

- 101: Switching valve

- 102: Flow rate adjustment valve

- 110: Control part

- 111: ROM

- 112: RAM

- 113: CPU

- 114: Interface

- 130a: Level sensor

- 130b: Level sensor

- 161: ROM

- 162: RAM

- 163: CPU

- 164: Interface

- 165: Pump actuation part

- 166: Valve actuation part

- 167: Sensor actuation part

- 220: Supply pipe

- 221: Hole

- 230: Supply pipe

- 231: Gas introduction cylinder

- 301: Arm tub

- 302: Leg tub

- 303: Pillar

- 310: Long chair

- 410: Mixing chamber

- 411: Conduit

- 412: Circulation pump

- 413: Pressure sensor

- 414: Open/close valve

- 415: Open/close valve

- 416: Level sensor

- 441: Gas supply part

- 442: Mixing mechanism

- 451: Liquid supply part

- 452: Conduit

- 453: Conduit

- 457: Circulation pump

- 471: Conduit

- 481: Metering or chock valve

### Detailed Description of the Preferred Embodiment

The present invention will be explained in detail with reference to preferred embodiments. However, the preferred embodiments are not intended to limit the present invention.

In an embodiment, the present invention provides a fluid mixing apparatus (e.g., 20) configured to be connected to a tub, a liquid supply path, and a gas supply path, comprising: (i) a liquid-storing chamber (e.g., 21) for storing liquid and mixing gas into liquid, said liquid-storing chamber being pressurable; (ii) a supply pipe (e.g., 220) disposed inside the liquid-storing chamber, said supply pipe having multiple holes (e.g., 221) for discharging liquid outwardly from the inside of the supply pipe through the holes to the inside of the liquid-storing chamber; (iii) a liquid level setting device (e.g., 130) for setting a liquid level in the liquid-storing chamber, said multiple holes being disposed substantially only in a portion of the supply pipe, which portion is located substantially above the set liquid level in the liquid-storing chamber; and (iv) a circulation path (e.g., 73, 74) for circulating the liquid in the liquid-storing chamber, said circulation path having one end connected to the supply pipe to supply liquid into the supply pipe and another end connected to the inside of the liquid-storing chamber at a position below the set liquid level, said circulation path being provided with a circulation pump (e.g., 31) for circulating the liquid in the liquid-storing chamber through the circulation path via the supply pipe. In the above, the liquid can be continuously circulated in a loop formed by the supply pipe, the inside of the liquid-storing chamber, the circulation path, and the pump while the liquid level is controlled, wherein liquid discharge to a space above the liquid surface can be performed continuously. Preferably, the portion with the holes may extend in a center from substantially or nearly the liquid surface to a position close to a ceiling or an inner wall of the liquid-storing chamber to increase exposure and contact of the liquid to and with the gas present in the space. In an embodiment, the supply pipe has substantially no holes for discharging liquid below the set liquid level, i.e., in a portion immersed in the liquid, so that pressure loss can be minimized.

In the above, in an embodiment, the supply pipe may preferably be fixed at a bottom of the liquid-storing chamber. In an embodiment, two or more supply pipes can be used. In an embodiment, the supply pipe can be fixed onto a side wall or a ceiling of the liquid-storing chamber.

In any of the aforesaid embodiments, the supply pipe may preferably be disposed substantially or nearly upright for efficient mixing of gas and liquid. In an embodiment, the supply pipe can be bent, curved, branched, or angularly fixed.

In any of the aforesaid embodiments, the portion having the multiple holes of the supply pipe may preferably be located at a center of the liquid-storing chamber with respect to a lateral cross section for efficient mixing of gas and liquid. In an embodiment, the chamber can have a circular lateral cross section, rectangular lateral cross section, other polygonal lateral cross section. In an embodiment, the portion having the multiple holes can be located near a corner.

In any of the aforesaid embodiments, the multiple holes may be disposed around a circumferential surface of the supply pipe so as to radially discharge the liquid therethrough as a shower to a space defined above the set liquid level inside the liquid-storing chamber. In an embodiment, the portion may be erected upwards so that the holes can be positioned from a lower part of the space to an upper part of the space, and the liquid can be discharged from the lower part of the space through the upper part of the space to a shower shape object within the liquid-storing chamber, resulting in elevating the dissolution efficiency.

In any of the aforesaid embodiments, the set liquid level in the liquid-storing chamber may preferably be positioned between 30% to 70% (including 40%, 50%, 60%, and values between any two numbers of the foregoing) of a depth of the liquid-storing chamber. In an embodiment, the set liquid level in the liquid-storing chamber can be positioned between 20% to 80% of a depth of the liquid-storing chamber as long as the gas dissolution efficiency is good. If the position is too low, not enough liquid can be supplied in the liquid-storing chamber and not enough pressure can be applied to the shower. If the position is too high, the liquid discharged from the holes cannot have enough chances to be exposed to the gas in the liquid-storing chamber.

In any of the aforesaid embodiments, the supply pipe may preferably have a height which is greater than 50% (including 60%, 70%, 80%, 90%, and values between any two numbers of the foregoing) of a depth of the liquid-storing chamber for the reasons described above, especially when the supply pipe is erected upright from the bottom of the liquid-storing chamber. In an embodiment, an upper end of the supply pipe can touch or can be close to a ceiling of the liquid-storing chamber.

In any of the aforesaid embodiments, the portion having the multiple holes of the supply pipe may preferably be disposed from an upper end to 20% to 60% (including 30%, 40%, 50%, and values between any two numbers of the foregoing) of the height of the supply pipe for the reasons described above. In an embodiment, the supply pipe can extend from the ceiling of the liquid-storing chamber, and in that case, the portion with the holes may be more than 60% of the length of the supply pipe which may be less than 50% of the depth of the liquid-storing chamber.

In any of the aforesaid embodiment, the liquid level setting device may preferably be a water surface sensor (e.g., 130a) which is installed on an inner wall of the liquid-storing chamber, wherein the water surface sensor transmits a signal to an external liquid supply controller (e.g., 110) when the liquid surface raises and reaches the water surface sensor. In the above, in an embodiment, the water surface sensor may serve as an upper water surface sensor (e.g., 130a), and the liquid level setting device may further comprise a lower water surface sensor (e.g., 130b) which is installed on an inner wall of the liquid-storing chamber, wherein the lower water surface sensor transmits a signal to the external liquid supply controller (e.g., 110) when the liquid surface lowers and reaches the lower water surface sensor. Such sensors can be installed on the supply pipe. The liquid level setting device can be any other suitable device or mechanism such as a weight sensor which senses the weight of the liquid stored in the liquid-storing chamber.

In any of the aforesaid embodiments, the supply pipe may be divided into two portions consisting of the portion with the multiple holes and a portion without holes for discharging liquid, wherein a gas introducing conduit (e.g., 231) is further provided wherein a lower end of the gas introducing conduit is connected to the portion without holes and an upper end of the gas introducing conduit is opened in a space above the set liquid level inside the liquid-storing chamber so as to introduce gas present in the space into the supply pipe.

In any of the aforesaid embodiments, the liquid-storing chamber may preferably have a pressure release valve for releasing pressure inside the liquid-storing chamber when the pressure reaches a give level. The pressure inside the liquid-storing chamber may be about 1.5 atom to about 3.0 atom. If the pressure exceeds a given level, the release valve opens to adjust the inside pressure. This can be controlled by the external controller (e.g., 110) or the release valve can be automatically activated as a safety valve.

In any of the aforesaid embodiments, the size of the holes can be selected to create a shower which is composed of drops, mist, liquid stream, etc. In an embodiment, the size of the holes may be about 0.5 mm to about 0.8 mm. The holes may preferably be boreholes, and more than 100 holes may be arranged substantially or nearly uniformly along the circumference of the portion of the supply pipe. By adjusting the revolution of the pump provided in the circulation path, it is possible to adjust the squirting size of the liquid from the holes. If the revolution is high, the supply pressure is high, and the squirting size of the liquid from the holes can be small so as to elevate the gas dissolution efficiency. The system configurations including the supply pressure may be selected so that the squirted liquid can reach an inner wall of the liquid-storing chamber.

In addition, if the tub is a personal tub, the liquid stored in the tub may be 10-50 litters, and accordingly, the capacity of the liquid-storing chamber can be determined. If the mixing capacity of the liquid-storing chamber is high, the size of the liquid-storing chamber can be as small as less than 1/2 (1/3, 1/4, 1/5, and values between any two numbers of the foregoing) of the liquid of the tub. In an embodiment, the capacity of the liquid-storing chamber may be in the range of 5-50 litters (including 10 litters, 20 litters, 30 litters, 40 litters, and values between any two numbers of the foregoing, preferably 10-30 litters). In an embodiment, the supply pipe may have a length of about 300 mm ± 50%.

In another embodiment, the present invention provides a bath fluid mixing system comprising: (i) a fluid mixing apparatus (e.g., 20) comprising: (a) a liquid-storing chamber (e.g., 21) for storing liquid and mixing gas into liquid, said liquid-storing chamber being pressurable; (b) a supply pipe (e.g., 220) disposed inside the liquid-storing chamber, said supply pipe having multiple holes (e.g., 221) for discharging liquid outwardly from the inside of the supply pipe through the holes to the inside of the liquid-storing chamber; (c) a liquid level setting device (e.g., 130) for setting a liquid level in the liquid-storing chamber, said multiple holes being disposed substantially only in a portion of the supply pipe, which portion is located substantially above the set liquid level in the liquid-storing chamber; and (d) a circulation path (e.g., 73, 74) for circulating the liquid in the liquid-storing chamber, said circulation path having one end connected to the supply pipe to supply liquid into the supply pipe and another end connected to the inside of the liquid-storing chamber at a position below the set liquid level, said circulation path being provided with a circulation pump (e.g., 31) for circulating the liquid in the liquid-storing chamber through the circulation path via the supply pipe; (ii) a tub (e.g., 3) for storing liquid from the liquid-storing chamber; (iii) a liquid supply path (e.g., 78) for supplying liquid to the liquid-storing chamber; and (iv) a gas supply path (e.g., 77) for supplying gas to the liquid-storing chamber.

In the above, the fluid mixing apparatus can be of any of the foregoing embodiments.

In the above, in an embodiment, the gas supply path may be connected to the liquid-storing chamber. In an embodiment, the gas supply path may alternatively or additionally be connected to the circulation path upstream of the liquid-storing chamber and downstream of the circulation pump.

In any of the aforesaid embodiments, the system may further comprise a tub liquid circulation path (e.g., 72) which is connected to the tub and the liquid-storing chamber for circulating liquid between the tub and the liquid-storing chamber, said tub liquid circulation path being provided with a circulation pump (e.g., 30).

In still another embodiment, the present invention provides a fluid mixing method using any of the foregoing fluid mixing apparatus or fluid mixing system. In an embodiment the method may comprise: (I) supplying liquid to a pressurable liquid-storing chamber to a level which is 30% to 70% of a depth of the liquid-storing chamber; (II) supplying gas to the liquid-storing chamber; (III) circulating the liquid in the liquid-storing chamber in a loop formed by a supply pipe disposed inside the liquid-storing chamber, the inside of the liquid-storing chamber, and a circulation path, said circulation path having one end connected to the supply pipe to supply liquid into the supply pipe and another end connected to the inside of the liquid-storing chamber at a position below the liquid level, said circulation path being provided with a circulation pump for circulating the liquid in the liquid-storing chamber through the circulation path via the supply pipe, said supply pipe having multiple holes; and (IV) in the loop, discharging the liquid outwardly from the inside of the supply pipe through the holes substantially only to a space inside the liquid-storing chamber above the liquid level in the liquid-storing chamber.

In the above, in an embodiment, the gas may be supplied in the circulation path upstream of the liquid-storing chamber and downstream of the circulation pump.

In any of the aforesaid embodiments, the method may further comprise supplying the liquid from the liquid-storing chamber to a tub.

In any of the aforesaid embodiments, the method may further comprise circulating the liquid between the liquid-storing chamber and the tub using a tub liquid circulation path which is connected to the tub and the liquid-storing chamber, said tub liquid circulation path being provided with a circulation pump.

In the present disclosure where conditions and/or structures are not specified, the skilled artisan in the art can readily provide such conditions and/or structures, in view of the present disclosure, as a matter of routine experimentation. Also, in the present disclosure, the numerical numbers applied in embodiments can be modified by a range of at least ±50% in other embodiments, and the ranges applied in embodiments may include or exclude the endpoints.

Examples of the present invention are explained below based on drawings.

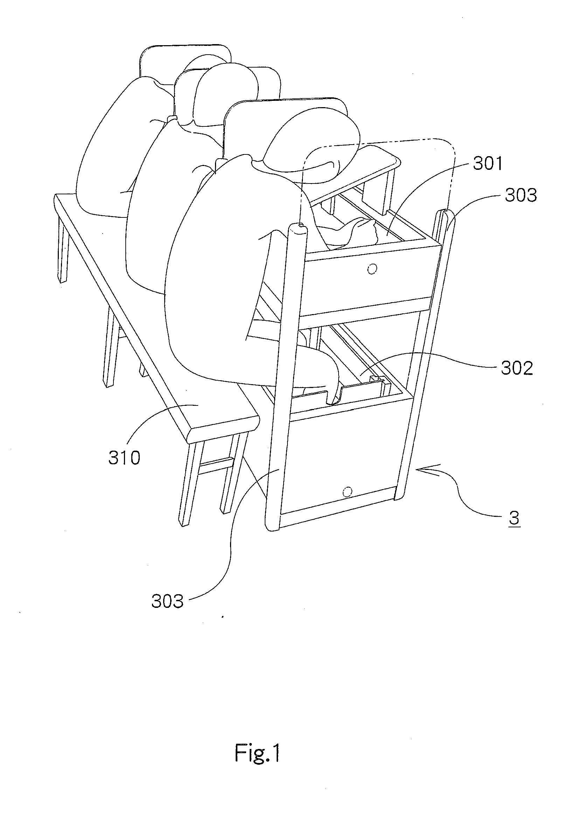

Fig. 1 is a perspective view of a tub 3 constituting a thermal bath apparatus that applies a mixing apparatus 20 conforming to the first example of the present invention.

This tub 3 comprises an arm tub 301 and a leg tub 302, where both tubs are connected on top of each other via a pillar 303. The user sits on a long chair 310 installed in front of the tub 3, and soaks his or her arms in the arm tub 301 and legs in the leg tub 302, both of which store a liquid mixed with gas, to locally promote blood circulation in the body. For your information, this tub 3 is not limited to the aforementioned tub for partial body bathing having a chair for three persons, but it may be any other type such as the single-chair type described in Japanese Patent Laid-open No. 2006-141617 or a tub for full body bathing.

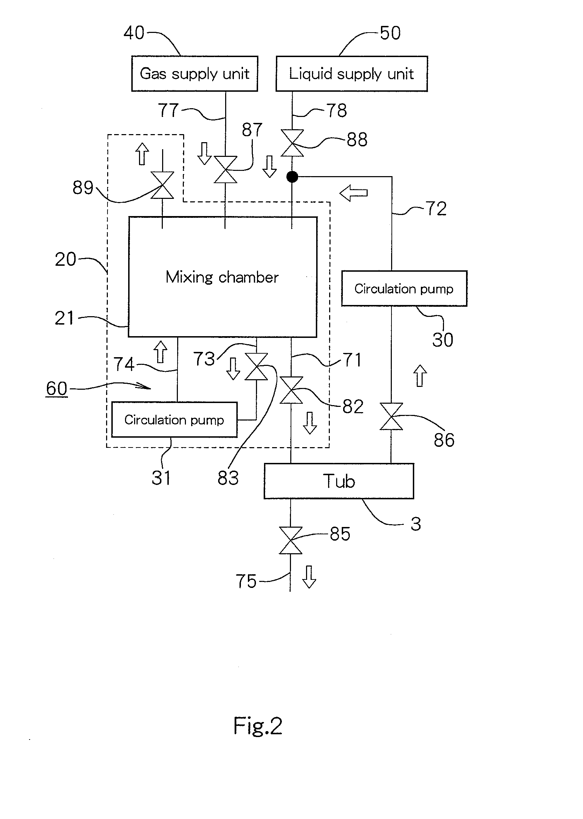

Fig. 2 is a schematic diagram of the flows of gas and liquid in a thermal bath apparatus that applies a mixing apparatus 20 conforming to the first example of the present invention.

This thermal bath apparatus has a tub 3, a mixing apparatus 20 conforming to the present invention, a liquid supply line 71 for supplying liquid from the mixing apparatus 20 to the tub 3, a liquid conduit 72 for collecting liquid from the tub 3 into the mixing apparatus 20, a circulation pump 30 for circulating liquid through the liquid supply line 72 from the mixing apparatus 20 to the supply line 71, to the tub 3, and back to the mixing apparatus 20, a liquid supply part 50 that supplies liquid to the conduit 72 via a conduit 78, and a gas supply part 40 that supplies gas to the mixing apparatus 20 via a conduit 77. The mixing apparatus 20 has a liquid mixing chamber 21 and a chamber circulation means 60 for mixing gas into liquid.

The liquid supply part 50 has a liquid supply mechanism (not illustrated) for supplying water, warm water or other liquid to the conduit 72. The conduit 78 connecting the liquid supply part 50 and the conduit 72 has a flow rate adjustment valve 88 that allows for adjustment of the feed rate of liquid. This way, the necessary amount of liquid can be supplied as deemed appropriate by considering the amount of liquid circulating through the thermal bath apparatus and stored in the tub 3. For your information, in this example the liquid supplied from the liquid supply part 50 to the conduit 72 is warm water.

The gas supply part 40 has a mechanism for supplying thermal effect gas, such as carbonic acid gas, to the conduit 77. The conduit 77 for supplying gas from the gas supply part 40 to the mixing apparatus 20 has a flow rate adjustment valve 87. This way, the amount of gas mixed into the liquid circulating through the thermal bath apparatus can be adjusted. For your information, in this example the gas supplied from the liquid supply part 40 to the conduit 77 is carbonic acid gas.

The circulation pump 30 is installed in the conduit 72 that connects the tub 3 and the mixing apparatus 20. Also, a flow rate adjustment valve 86 is installed in the conduit 72 for adjusting the inflow into the conduit 72 of the liquid flowing out of the tub 3 and already mixed with gas. This liquid flowing out of the tub 3 and already mixed with gas circulates to the mixing apparatus 20 via the conduit 72 by the action of the circulation pump 30 when the flow rate adjustment valve 86 is open. For your information, the liquid flowing out of the tub 3 to the conduit 72 and already mixed with gas is mostly the liquid mixed with gas that has overflowed from the tub 3.

A conduit 75 is connected to the bottom of the tub 3, and a flow rate adjustment valve 85 is installed in the conduit 75. By opening the flow rate adjustment valve 85, the liquid stored in the tub 3 and already mixed with gas can be drained directly from the tub 3.

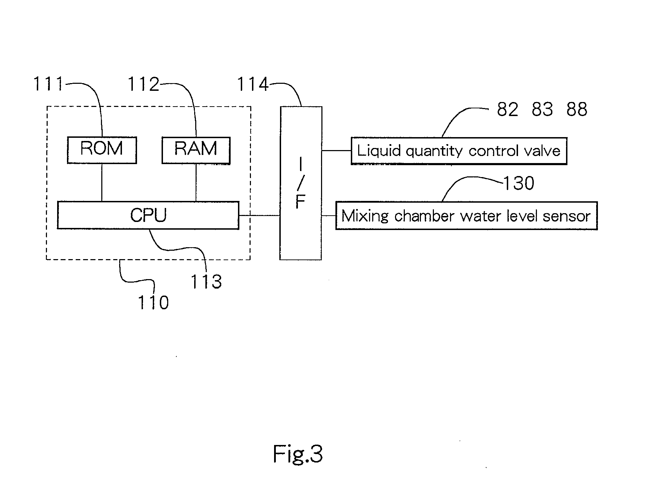

Fig. 3 is a block diagram of a key electrical configuration of a thermal bath apparatus that applies a mixing apparatus 20 conforming to the first example of the present invention.

This thermal bath apparatus has a control part 110 comprising a ROM 111 that stores the operation program needed to control the apparatus, a RAM 112 that temporarily stores data, etc., during control, and a CPU 113 that executes logic calculations. This control part 110 connects, via an interface 114, to flow rate adjustment valves 82, 83, 88 in the thermal bath apparatus and to a level sensor 130 capable of detecting the level in the mixing chamber 21 of the mixing apparatus 20.

This control part 110 adjusts the open angles of the flow rate adjustment valves 82, 83, 88 installed in the supply line 71, a circulation line 73 and the conduit 78 according to the increase or decrease in the level in the mixing chamber 21 of the mixing apparatus 20. This way, the amounts of liquid and gas flowing into or out of the tub 3 and mixing apparatus 20 can be controlled. For your information, this control part 110 may be connected to the flow rate adjustment valve 87 and an open/close valve 89 via the interface 114 to control the amount of supplied gas flowing into or out of the mixing chamber 21.

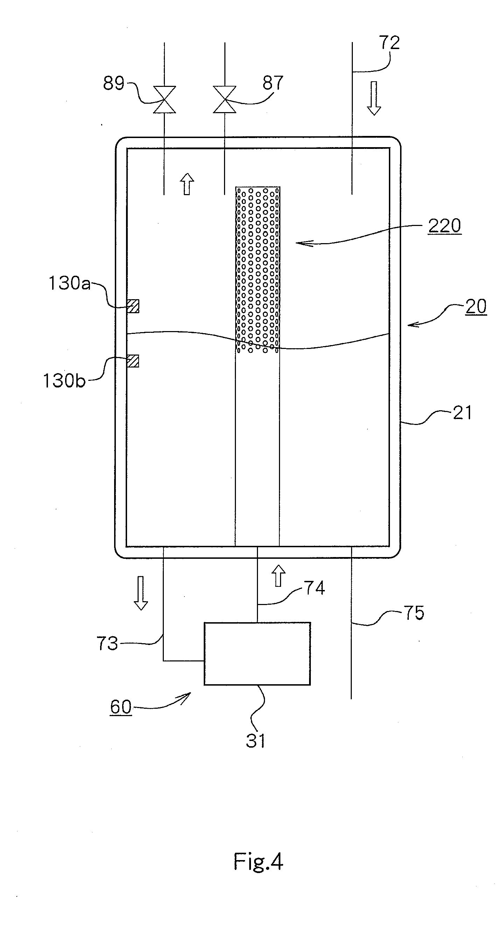

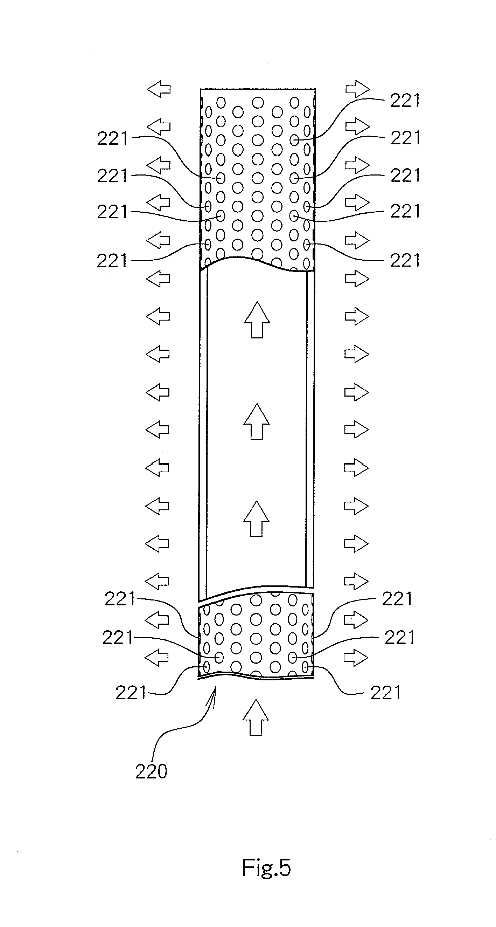

Fig. 4 is an explanation drawing of a mixing apparatus 20 conforming to the first example of the present invention, while Fig. 5 is a partial side section view of a supply pipe 220 provided in this mixing apparatus 20.

This mixing apparatus 20 has a mixing chamber 21, level sensors 130 that monitor the level in the mixing chamber 21, and a chamber circulation means 60 for mixing gas into the liquid stored in the mixing chamber 21.

A pair of level sensors 130 are provided on the interior wall of the mixing chamber 21 at the top and bottom, as shown in Fig. 4. If the level reaches the position of an upper level sensor 130a, the corresponding level detection signal is sent to the control part 110 and the open angle of the flow rate adjustment valve 88 provided in the conduit 78, which connects to the conduit 72, is reduced to reduce the amount of liquid supplied to the mixing chamber 21 from the liquid supply part 50. If the level drops to below a lower level sensor 130b, the corresponding level detection signal is sent to the control part 110 and the open angle of the flow rate adjustment valve 88 is increased to increase the amount of liquid supplied to the mixing chamber 21. This way, the level of liquid in the mixing chamber 21 is maintained between the two level sensors 130a, 130b.

The chamber circulation means 60 has a circulation pump 31, a circulation line 73 that guides the liquid stored in the mixing chamber 21 to the circulation pump 31 from the bottom of the mixing chamber 21, a circulation line 74 for causing the liquid to flow out to the mixing chamber 21 again by the action of the circulation pump 31, and a supply pipe 220 for releasing liquid into the mixing chamber 21 as shown in Fig. 5.

The supply pipe 220 has many holes 221. By connecting this supply pipe 220 to the circulation line 74, liquid is supplied to the mixing chamber 21 through the many holes 221. To be specific, the liquid stored in the mixing chamber 21 flows into the circulation pump 31, through the mixing chamber 21, from the circulation line 73 connected to the bottom of the mixing chamber 21, and is released in a shower form into the mixing chamber 21 again, by the action of the circulation pump 31, via the many holes 221 in the supply pipe 220 connected to the circulation line 74. At this time, the supply pipe 220 is installed in such a way that its many holes 221 are positioned above the level of liquid in the mixing chamber 21. This increases the contact area of the liquid released from the many holes 221 in a shower form into the space above the level of liquid in the mixing chamber 21, the gas supplied from the top section of the mixing chamber 21, and the gas dwelling in the space above the level of liquid stored in the mixing chamber 21, thereby allowing the gas to dissolve efficiently in the liquid in the mixing chamber 21.

For your information, in this example the many holes 221 are formed in an area of the supply pipe 220 above the level of liquid in the mixing chamber 21. However, it is also possible to form many holes 221 in an area below the level of liquid to let liquid flow out through these holes.

Also in this example, the supply pipe 220 is provided on the interior bottom face of the mixing chamber 21 and is configured in such a way that liquid is guided into the supply pipe 220 from bottom to top. However, it is also possible to provide the pipe in a manner projecting from the interior side face or top face of the mixing chamber 21 so that liquid flows out into the section above the level of liquid in the mixing chamber 21 being filled with carbon dioxide or other gas.

The mixing chamber 21 has an open/close valve 89 for bleeding air from the mixing chamber 21. The open/close valve 89 is configured in such a way that it opens when liquid that has been mixed with gas is supplied from the mixing chamber 21 to the tub 3. To prevent the liquid containing gas in the mixing chamber 21 from contacting outside air, however, it is more preferable to configure this valve so that it does not open when liquid that has been mixed with gas is supplied from the mixing chamber 21 to the tub 3. For example, the open/close valve 89 can be opened only when the liquid stored in the mixing chamber 21 or tub 3 is drained.

The liquid into which gas has been mixed in the mixing chamber 21 is supplied to the tub 3 via the supply line 71 by the opening of the flow rate adjustment valve 82. The liquid containing gas that has flowed out of the tub 3 is circulated to the mixing chamber 21 through the conduit 72 if the flow rate adjustment valve 86 is open. If the flow rate adjustment valve 85 is open, the liquid containing gas is drained from the tub 3 to outside the thermal bath apparatus.

As explained above, in this example the liquid stored in the mixing chamber 21 is circulated and mixed repeatedly with the gas supplied to the mixing chamber 21, in order to supply to the tub 3 a liquid in which a sufficient amount of gas is dissolved.

Also, in this example the gas supplied from the gas supply part 40 is carbon dioxide. However, any other gas can also be used.

For your information, the supply line 71 to the tub 3 may have a collection means for separating from the liquid the gas that has been isolated from the liquid and collecting the gas, and a new conduit may be provided to guide the gas collected by this collection means to the conduit 72 again. This new conduit may also be configured in such a way that it connects from the conduit 71 to the circulation line 73 in the chamber circulation means 60.

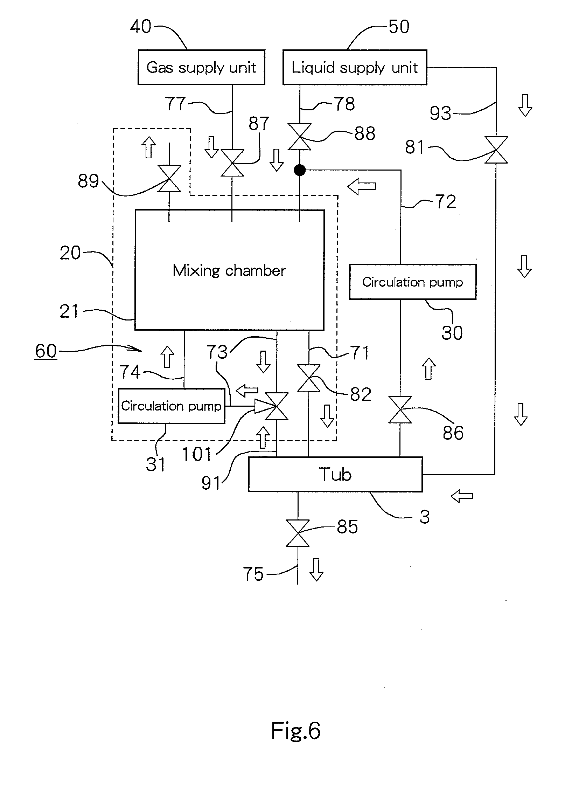

Fig. 6 is a schematic diagram of the flows of gas and liquid in a thermal bath apparatus that applies a mixing apparatus 20 conforming to the second example of the present invention.

Unlike the mixing apparatus 20 conforming to the first example, this mixing apparatus 20 has a conduit 93 for supplying liquid directly to the tub 3 from the liquid supply part 50, where the conduit 93 has a flow rate adjustment valve 81 that adjusts the feed rate of liquid to the tub 3, while a conduit 91 is connected from the tub 3 to the circulation line 73 in the chamber circulation means 60 and a switching valve 101 is provided at the connection part, instead of the flow rate adjustment valve 83, for switching the flow channels. This switching valve 101 allows the liquid that has been mixed with gas and flowing out of the tub 3 through the conduit 91 to be guided into the circulation line 73.

To be specific, when the switching valve 101 connects the flow channels in such a way that the liquid mixed with gas is fed to the circulation line 73 from the tub 3 through the conduit 91, the liquid mixed with gas is released by the action of the circulation pump 31 from the tub 3 to the mixing chamber 21 via the supply pipe 220 connected to the circulation line 74. This configuration allows for quick, efficient dissolution of gas in the liquid supplied directly from the liquid supply part 50 to the tub 3, or in the liquid in the tub 3 that is already mixed with gas when the content of dissolved gas drops due to exposure to atmosphere.

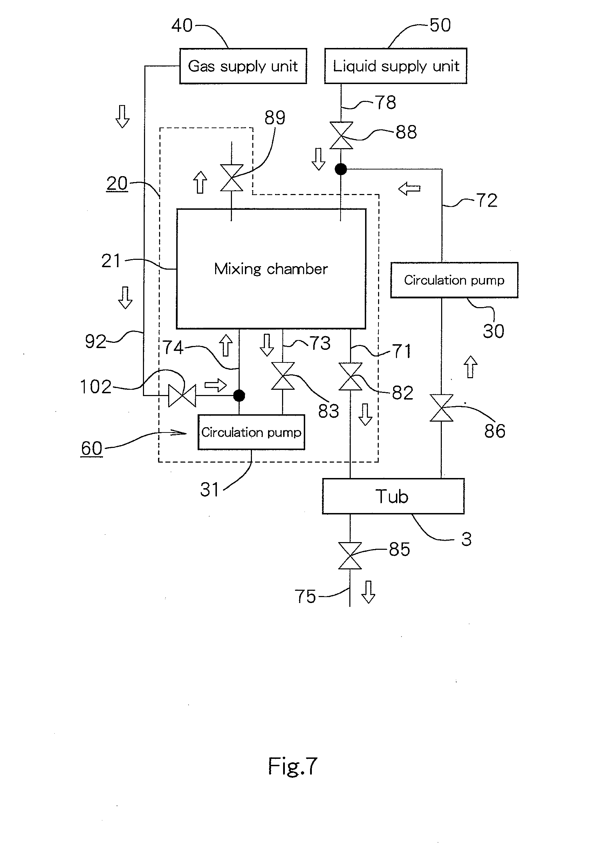

Fig. 7 is a schematic diagram of the flows of gas and liquid in a thermal bath apparatus that applies a mixing apparatus 20 conforming to the third example of the present invention.

Unlike the mixing apparatus 20 conforming to the second example, this mixing apparatus 20 has a conduit 92 connected to the circulation line 73 in the chamber circulation means 60 to allow for supply of gas from the gas supply part 40, and the conduit 92 has a flow rate adjustment valve 102 that adjusts the feed rate of gas. By adopting such configuration to supply new gas to the liquid flowing out of the mixing chamber 21 to the circulation line 73 while the liquid is traveling through the circulation line 73, it becomes possible to increase the content of dissolved gas in the liquid that has been mixed with gas.

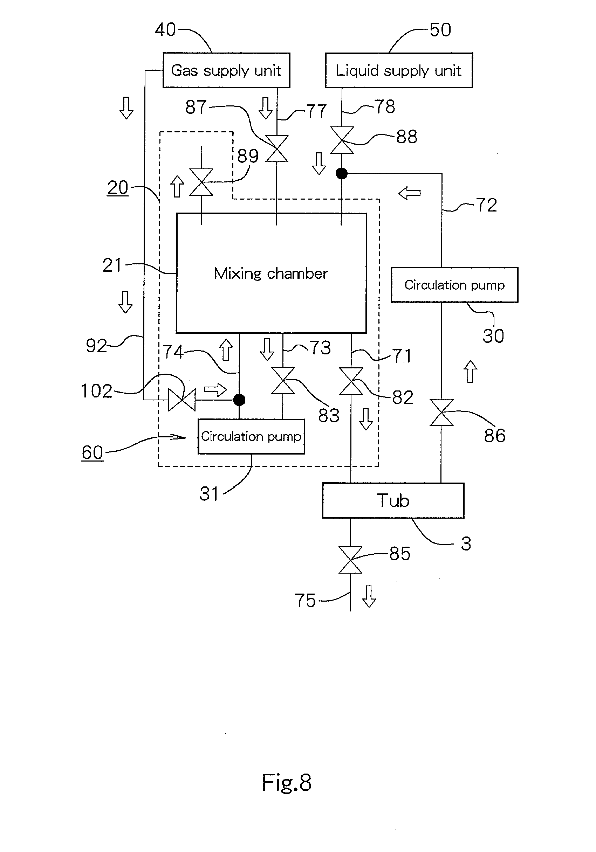

Fig. 8 is a schematic diagram of the flows of gas and liquid in a thermal bath apparatus that applies a mixing apparatus 20 conforming to the fourth example of the present invention.

Unlike the mixing apparatus 20 conforming to the third example, this mixing apparatus 20 allows gas to be supplied from the gas supply part 40 through the conduit 92 connected to the circulation line 74 in the chamber circulation means 60, and also through the conduit 77 connected to the top section of the mixing chamber 21. By adopting such configuration to supply gas from the top section of the mixing chamber 21, and also from the circulation line 74 from which liquid is caused to flow out to the supply pipe 220 by the action of the circulation pump 31, it becomes possible to increase the content of dissolved gas in the liquid that has been mixed with gas.

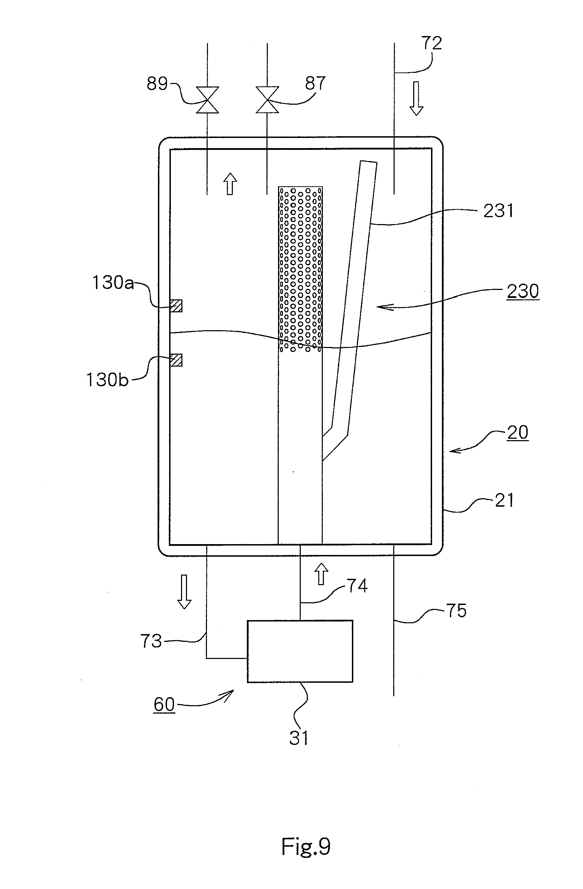

Fig. 9 is an explanation drawing of a variation of a mixing apparatus 20 conforming to the present invention. Take note that the same components illustrated earlier in Fig. 4 are denoted by the same symbols and their detailed explanation is omitted.

As shown in Fig. 9, a supply pipe 230 in this mixing apparatus 20 has a gas introduction cylinder 231. This gas introduction cylinder 231 is connected to the body of the supply pipe 230 which has no holes 221 and which is positioned below the level of liquid stored in the mixing chamber 21, and its top opening is positioned above the level of liquid stored in the mixing chamber 21. The configuration is such that the gas dwelling in the top layer of the mixing chamber 21 is caused by the Venturi effect or other action to flow, through the gas introduction pipe 231, into the liquid passing through the supply pipe 230. This way, gas can be mixed with liquid more efficiently.

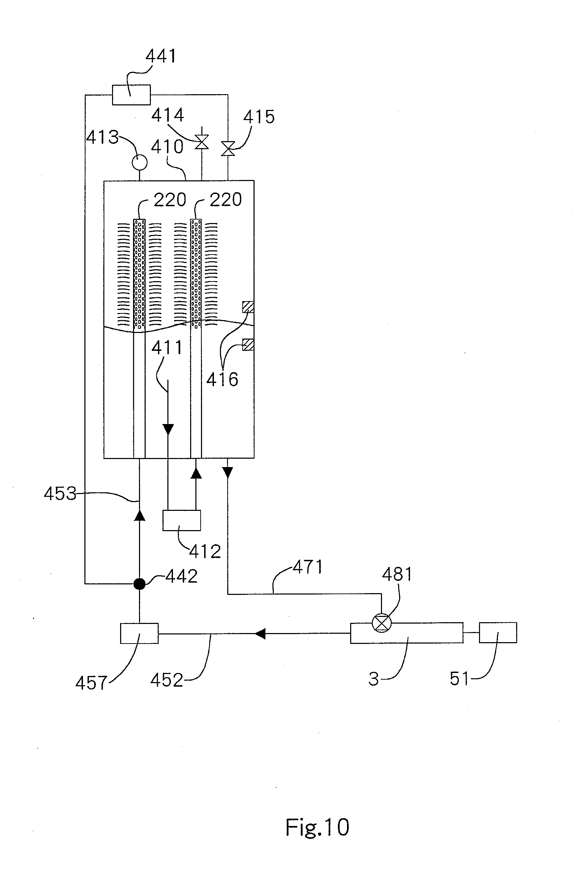

Fig. 10 is an explanatory drawing showing another example.

A mixing chamber 410 has a pair of supply pipes 220 inside, where the pipes have many holes explained earlier for injecting mixed liquid into the space above the level of mixed liquid stored in the mixing chamber 410. One supply pipe 220 is connected to a conduit 453 for supplying the mixed liquid to the mixing chamber 410. The other supply pipe 220 is connected to a conduit 411 that supplies mixed liquid by suctioning it from the middle layer of mixed liquid stored in the mixing chamber 410 by the action of a circulation pump 412.

With reference to Fig. 2 once again. in this mixing chamber 410, a pair of level sensors 416 are provided for detecting the level of mixed liquid stored therein. This mixing chamber 410 also has a pressure sensor 13 that measures the internal pressure of the mixing chamber 410. Furthermore, this mixing chamber 410 is connected to outside air via an open/close valve 414. In addition, this mixing chamber 410 is connected to a gas supply part 441 that supplies carbon dioxide through an open/close valve 415.

The internal pressure of this mixing chamber 410 is set to approx. 1.5 to 3 atmospheres. The pressure in this mixing chamber 410 is constantly monitored by the pressure sensor 413, and opening/closing of the open/close valve 15 is controlled based on the pressure value detected by this pressure sensor 413. This open/close control is implemented by means of a control part 160 explained later.

The tub 3 is connected to a circulation pump 457 via a conduit 452. This circulation pump 457 connects to the supply pipe 220 in the mixing chamber 410 via the conduit 453 described above. Also, a mixing mechanism 442 is provided in the conduit 453 for mixing the carbon dioxide supplied from the gas supply part 441 into the mixed liquid passing through the conduit 453. In addition, the tub 3 is connected to a liquid supply part 451 for supplying warm water to this tub 3.

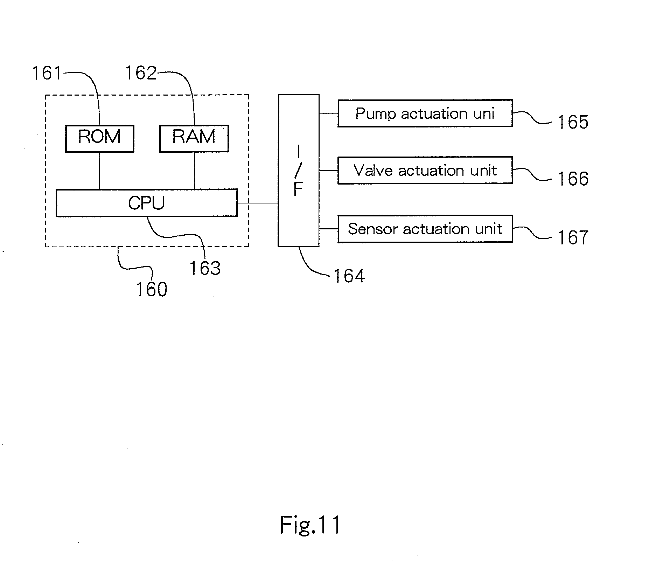

Fig. 11 is a block diagram of a key electrical configuration of a bath mixing apparatus conforming to an example of the present invention.

This bath mixing apparatus has a control part 160 comprising a ROM 161 that stores the operation program needed to control the apparatus, a RAM 162 that temporarily stores data, etc., during control, and a CPU 136 that executes logic calculations. This control part 160 connects, via an interface 164, to a pump drive part 165 for controlling the driving of the circulation pump 412 described above. This control part 160 also connects, via the interface 64, to a valve drive part 166 for controlling the opening/closing of the valve 414 described above. Furthermore, this control part 60 connects, via the interface 164, to a sensor connection part 167 that connects the pressure sensor 13 and level sensor 16 described above. This bath mixing apparatus executes various operations by means of control by this control part 160.

In the bath mixing apparatus having the configuration described above, the warm water supplied from the liquid supply part 451 to the tub is force-fed into the mixing chamber 410 by the action of the circulation pump 457. At this time, carbon dioxide is mixed into the warm water by the action of the mixing mechanism 442 immediately before the warm water enters the mixing chamber 410. The mixed liquid comprising warm water and carbon dioxide is injected into the space above the level of mixed liquid stored in the mixing chamber 410, through the many holes provided in the one supply pipe 220.

The space above the level of mixed liquid stored in the mixing chamber 410 is filled with the carbon dioxide supplied from the gas supply part 441. When mixed liquid is injected from the many holes in the supply pipe 220 and contacts this carbon dioxide, the carbon dioxide concentration in the mixed liquid increases. Also, the mixed liquid stored in the mixing chamber 410 is injected again, by the action of the circulation pump 412 and through the many holes in the other supply pipe 220, into the space above the level of mixed liquid stored in the mixing chamber 410. This further increases the carbon dioxide concentration in the mixed liquid.

Providing a metering or chock valve 81 near the supply ports of mixed liquid to the tub 3 along the conduit 471 allows the bubbles generating as a result of pressure difference between the mixed liquids supplied from the mixing chamber to the tub 3 to be made finer by means of pressurization at the metering or chock valve 81. That is, relatively large bubbles are dissipated to finer and more uniform bubbles by passing through the metering or chock valve. This is due to high pressure upstream of the metering or chock valve, the lowering of pressure and the increase of flow rate immediately downstream of the metering or chock valve, thereby breaking the relatively large bubbles. This reduces the unpleasant feel of the user in the tub 3 caused by the contact of large bubbles with the user's skin, and also allows bubbles to break easily because their size is smaller. As the metering or chock valve, a venture pipe, orifice, throttle valve, butterfly valve, or any other suitable valves can be used.

Also in the aforementioned example, a liquid-storing chamber can be used in addition to the mixing chamber 410, 20. By using the additional liquid-storing chamber, it is possible to reduce bubbles generated from the mixing liquid in the tub.

As described above, the above examples include the following embodiments.

An embodiment is a bath mixing apparatus further having: a gas supply line that connects the mixing chamber to the gas supply part via a valve; sensors that measure the pressures in the first and second mixing chambers; and a control part that controls the opening/closing of the valve based on the pressure values detected by the sensors.

According to the invention described in the embodiment, the pressures in the first and second mixing chambers can be maintained at appropriate levels.

In the above embodiment, a liquid-storing chamber is provided between the second mixing chamber and tub for temporarily storing mixed liquid.

According to the above embodiment, the amount of bubbles generated by the mixed liquid in the tub can be further reduced.

In any one of the above embodiments, a metering or chock valve is provided near the supply port to the tub along the conduit through which to supply mixed liquid to the tub.

According to the above embodiment, the bubbles generated by the mixed liquid as it is supplied to the tub can be made finer.

In any one of the above embodiments, the feed rate of gas supplied from the gas supply part is increased for a certain period if the pressure values detected by the sensors drop to below a specified value.

In the above embodiment, the supply of gas from the gas supply part is stopped for a certain period if the pressure values detected by the sensors drop to below a specified value, and after elapse of a specified period the feed rate of gas supplied from the gas supply part is increased for a certain period to a level higher than the feed rate before the supply was stopped.

In the above embodiment, the control part repeats the stopping and supplying of gas for a certain period until a specified pressure is reached.

According to the above embodiments, drop in the content of dissolved gas due to pressure drop in the mixing chambers can be prevented.

The present invention includes the above mentioned embodiments and other various embodiments including the following:

[Embodiment 1]

A mixing apparatus for mixing gas into a liquid supplied to a tub, said mixing apparatus characterized by having: (i) a liquid-storing chamber connected to a tub, gas supply part and liquid supply part and storing liquid inside; (ii) a supply pipe installed inside the liquid-storing chamber and having many holes through which to inject liquid into the space above the level of liquid stored in the liquid-storing chamber; and (iii) circulation lines with a circulation pump for supplying the liquid stored in the liquid-storing chamber to the supply pipe.

[Embodiment 2]

A mixing apparatus according to Embodiment 1, wherein the liquid-storing chamber has a level sensor and also has a control mechanism for adjusting the feed rate of liquid to the liquid-storing chamber according to the level in the liquid-storing chamber.

[Embodiment 3]

A mixing apparatus according to Embodiment 1 or 2, wherein the supply pipe has a gas introduction pipe for causing the gas dwelling in the top layer of the liquid-storing chamber to flow in.

[Embodiment 4]

A mixing apparatus according to any one of Embodiments 1 to 3, wherein the gas supply part is connected to the circulation lines.

[Embodiment 5]

A mixing apparatus according to any one of Embodiments 1 to 3, wherein the gas supply part is connected to the top section of the liquid-storing chamber and also to the circulation lines.

[Embodiment 6]

A mixing apparatus according to any one of Embodiments 1 to 7, wherein the gas supplied from the gas supply part is carbon dioxide.

The present application claims priority to Japanese Patent Application No. 2006-275040, filed October 6, 2006, the disclosure of which is incorporated herein by reference in its entirety.

It will be understood by those of skill in the art that numerous and various modifications can be made without departing from the spirit of the present invention. Therefore, it should be clearly understood that the forms of the present invention are illustrative only and are not intended to limit the scope of the present invention.

## Claims

1. A fluid mixing apparatus configured to be connected to a tub, a liquid supply path, and a gas supply path, comprising:
a liquid-storing chamber for storing liquid and mixing gas into liquid, said liquid-storing chamber being pressurable;
a supply pipe disposed inside the liquid-storing chamber, said supply pipe having multiple holes for discharging liquid outwardly from the inside of the supply pipe through the holes to the inside of the liquid-storing chamber;
a liquid level setting device for setting a liquid level in the liquid-storing chamber, said multiple holes being disposed substantially only in a portion of the supply pipe, which portion is located substantially above the set liquid level in the liquid-storing chamber; and
a circulation path for circulating the liquid in the liquid-storing chamber, said circulation path having one end connected to the supply pipe to supply liquid into the supply pipe and another end connected to the inside of the liquid-storing chamber at a position below the set liquid level, said circulation path being provided with a circulation pump for circulating the liquid in the liquid-storing chamber through the circulation path via the supply pipe.

2. The fluid mixing apparatus according to claim 1, wherein the supply pipe is fixed at a bottom of the liquid-storing chamber.

3. The fluid mixing apparatus according to claim 2, wherein the supply pipe is disposed substantially or nearly upright.

4. The fluid mixing apparatus according to claim 1, wherein the portion having the multiple holes of the supply pipe is located at a center of the liquid-storing chamber with respect to a lateral cross section.

5. The fluid mixing apparatus according to claim 1, wherein the multiple holes are disposed around a circumferential surface of the supply pipe so as to radially discharge the liquid therethrough as a shower to a space defined above the set liquid level inside the liquid-storing chamber.

6. The fluid mixing apparatus according to claim 1, wherein the set liquid level in the liquid-storing chamber is positioned between 30% to 70% of a depth of the liquid-storing chamber.

7. The fluid mixing apparatus according to claim 3, wherein the supply pipe has a height which is greater than 50% of a depth of the liquid-storing chamber.

8. The fluid mixing apparatus according to claim 7, wherein the portion having the multiple holes of the supply pipe is disposed from an upper end to 20% to 60% of the height of the supply pipe.

9. The fluid mixing apparatus according to claim 1, wherein the liquid level setting device is a water surface sensor which is installed on an inner wall of the liquid-storing chamber, wherein the water surface sensor transmits a signal to an external liquid supply controller when the liquid surface raises and reaches the water surface sensor.

10. The fluid mixing apparatus according to claim 9, wherein the water surface sensor serves as an upper water surface sensor, and the liquid level setting device further comprises a lower water surface sensor which is installed on an inner wall of the liquid-storing chamber, wherein the lower water surface sensor transmits a signal to the external liquid supply controller when the liquid surface lowers and reaches the lower water surface sensor.

11. The fluid mixing apparatus according to claim 1, wherein the liquid-storing chamber has a pressure release valve for releasing pressure inside the liquid-storing chamber when the pressure reaches a give level.

12. A bath fluid mixing system comprising:
(i) a fluid mixing apparatus comprising:
a liquid-storing chamber for storing liquid and mixing gas into liquid, said liquid-storing chamber being pressurable;
a supply pipe disposed inside the liquid-storing chamber, said supply pipe having multiple holes for discharging liquid outwardly from the inside of the supply pipe through the holes to the inside of the liquid-storing chamber;
a liquid level setting device for setting a liquid level in the liquid-storing chamber, said multiple holes being disposed substantially only in a portion of the supply pipe, which portion is located substantially above the set liquid level in the liquid-storing chamber; and
a circulation path for circulating the liquid in the liquid-storing chamber, said circulation path having one end connected to the supply pipe to supply liquid into the supply pipe and another end connected to the inside of the liquid-storing chamber at a position below the set liquid level, said circulation path being provided with a circulation pump for circulating the liquid in the liquid-storing chamber through the circulation path via the supply pipe;
(ii) a tub for storing liquid from the liquid-storing chamber;
(iii) a liquid supply path for supplying liquid to the liquid-storing chamber; and
(iv) a gas supply path for supplying gas to the liquid-storing chamber.

13. The fluid mixing system according to claim 12, wherein the gas supply path is connected to the liquid-storing chamber.

14. The fluid mixing system according to claim 12, wherein the gas supply path is connected to the circulation path upstream of the liquid-storing chamber and downstream of the circulation pump.

15. The fluid mixing system according to claim 13, wherein the gas supply path is further connected to the circulation path upstream of the liquid-storing chamber and downstream of the circulation pump.

16. The fluid mixing system according to claim 12, further comprising a tub liquid circulation path which is connected to the tub and the liquid-storing chamber for circulating liquid between the tub and the liquid-storing chamber, said tub liquid circulation path being provided with a circulation pump.

17. A fluid mixing method comprising:
supplying liquid to a pressurable liquid-storing chamber to a level which is 30% to 70% of a depth of the liquid-storing chamber;
supplying gas to the liquid-storing chamber; and
circulating the liquid in the liquid-storing chamber in a loop formed by a supply pipe disposed inside the liquid-storing chamber, the inside of the liquid-storing chamber, and a circulation path, said circulation path having one end connected to the supply pipe to supply liquid into the supply pipe and another end connected to the inside of the liquid-storing chamber at a position below the liquid level, said circulation path being provided with a circulation pump for circulating the liquid in the liquid-storing chamber through the circulation path via the supply pipe, said supply pipe having multiple holes; and
in the loop, discharging the liquid outwardly from the inside of the supply pipe through the holes substantially only to a space inside the liquid-storing chamber above the liquid level in the liquid-storing chamber.

18. The fluid mixing method according to claim 17, wherein the gas is supplied in the circulation path upstream of the liquid-storing chamber and downstream of the circulation pump.

19. The fluid mixing method according to claim 17, further comprising supplying the liquid from the liquid-storing chamber to a tub.

20. The fluid mixing method according to claim 19, further comprising circulating the liquid between the liquid-storing chamber and the tub using a tub liquid circulation path which is connected to the tub and the liquid-storing chamber, said tub liquid circulation path being provided with a circulation pump.
